# EUROPEAN PATENT APPLICATION

(11) **EP 3 461 212 A1**
(43) Date of publication of application: **27.03.2019**
(21) Application number: 16905098.6
(22) Date of filing: 17.06.2016
(51) Int. Cl.: H04W 74/08, H04W 72/04, H04W 16/10

(54) **COMMUNICATION METHOD AND APPARATUS**

(71) Applicant: Huawei Technologies Co., Ltd., Longgang District Shenzhen, Guangdong 518129 (CN)
(72) Inventor: LI, Zhenyu, Shenzhen Guangdong 518129 (CN); LI, Hantao, Shenzhen Guangdong 518129 (CN)
(74) Representative: Gill Jennings & Every LLP
(86) International application number: PCT/CN2016/086265
(87) International publication number: WO 2017/214984

(57) **Abstract**

The present invention relates to the field of wireless communications technologies, and provides a communication method. The method includes: determining, by a base station when detecting that a carrier is idle, a first subframe that is used for sending downlink synchronization signals, where the downlink synchronization signals include a primary synchronization signal and a secondary synchronization signal; and sending the downlink synchronization signals to a terminal in the first subframe based on a subframe number of the first subframe and a first correspondence. Correspondingly, the terminal performs detection of the synchronization signals, and performs frame timing based on at least location information of the secondary synchronization signal in the first subframe and the first correspondence. In this way, downlink synchronization under an LBT mechanism can be implemented.

## Description

### TECHNICAL FIELD

The present invention relates to the field of wireless communications technologies, and in particular, to a communication method and apparatus.

### BACKGROUND

A spectrum is a basis of wireless communications. According to the latest international spectrum white paper released by the Federal Communications Commission (Federal Communications Commission, FCC for short), licensing-free or unlicensed (unlicensed) spectrum resources are more than authorized or licensed (licensed) spectrum resources. There is no constraint on use of the unlicensed spectrum resources by a wireless communications system and an operator. Therefore, there is a case in which a plurality of operators of a plurality of communications systems want to occupy a same spectrum. To implement fairness for different wireless communications systems on use of the unlicensed spectrum resources, in some regions, a wireless communications device needs to follow a specific rule when using the unlicensed spectrum resources, for example, a mechanism such as listen before talk (listen before talk, LBT for short) or a channel bandwidth occupation requirement in ETSI EN 301 893 released by the European Telecommunications Standards Institute (European Telecommunications Standards Institute, ETSI for short). According to a provision in ETSI EN 301 893, the wireless communications device needs to use the LBT mechanism when occupying an unlicensed spectrum resource. To be specific, before using a channel, the device first monitors whether the channel is idle or available, and if the channel is idle or available, the device can use the unlicensed spectrum resource.

With development of technologies, for the unlicensed spectrum resources, an introduction of the LBT mechanism results in that signals such as a primary synchronization signal (primary synchronization signal, PSS) and a secondary synchronization signal (secondary synchronization signal, SSS) cannot be sent from a device having a base station function to a terminal at a fixed absolute time. As a result, downlink synchronization is affected, and the terminal cannot be synchronous with the device having a base station function.

### SUMMARY

This application describes a communication method and apparatus.

According to one aspect, an embodiment of this application provides a communication method. The method includes: determining, by a base station when detecting that a carrier is idle, a first subframe that is used for sending downlink synchronization signals, where the downlink synchronization signals include a primary synchronization signal and a secondary synchronization signal; determining, by the base station, locations of the primary synchronization signal and the secondary synchronization signal in the first subframe, where the location of the secondary synchronization signal is determined based on a subframe number of the first subframe and a first correspondence; and sending, by the base station, the downlink synchronization signals to a terminal in the first subframe based on the determined locations of the primary synchronization signal and the secondary synchronization signal in the first subframe, where the first correspondence includes a correspondence between a subframe number and a location of a secondary synchronization signal in a subframe. By using a solution provided in this embodiment, the base station sends the downlink synchronization signals based on a subframe number and the first correspondence. Therefore, without occupying an additional resource, the terminal can obtain, by detecting a synchronization signal and in a relatively convenient and easy manner, a subframe number of a subframe in which the synchronization signal is located, and thereby can implement downlink synchronization.

In a possible design, the first correspondence is associated with a type of a communications system.

In a possible design, all subframes in one radio frame include at least one set, and locations of secondary synchronization signals in subframes in each set are different.

In a possible design, locations of secondary synchronization signals in subframes with subframe numbers being (k-1)*N/m to k*N/m-1 are different from each other, where there are N subframes in the one radio frame, the N subframes include m sets, N and m are natural numbers, N is an integer multiple of m, and 1≤k≤m.

In a possible design, a location of the primary synchronization signal in the subframe is fixed. Specifically, locations of the primary synchronization signal in subframes are fixed in one communications system, but may change between different communications systems.

In a possible design, the primary synchronization signal occupies a last symbol of a first timeslot in a subframe. In this way, a PSS sending manner of an existing protocol may be used to minimize a change to the protocol.

In a possible design, m>1, secondary synchronization codes of secondary synchronization signals in subframes in one set are the same, and different sets are corresponding to different secondary synchronization codes. For example, m=2. In this case, a current design scheme of a secondary synchronization code may be inherited in a maximized manner, and design complexity of a synchronization signal pattern may also be reduced.

In a possible design, a manner in which common signaling is sent may be determined based on a carrier preemption status. For example, when carrier preemption is relatively easy, the PSS/SSS and the common signaling may be sent in different subframes; and when carrier preemption is difficult, the PSS/SSS and the common signaling may be packetized together and sent in a subframe. The common signaling includes but is not limited to a PBCH and a SIB. In this way, signaling can be sent in a more flexible manner.

Specifically, whether carrier preemption is easy or difficult may be determined in a plurality of manners. For example, statistics may be collected on a probability of successfully preempting a carrier to send a synchronization signal in T synchronization windows. If the probability is greater than a preset threshold, it may be considered that carrier preemption is relatively easy. If the probability is less than a preset threshold, it may be considered that carrier preemption is relatively difficult.

In a possible design, the foregoing scheme may be applied to an unlicensed frequency band, especially to an unlicensed standalone scenario.

According to another aspect, an embodiment of this application provides a communication method. The method includes: receiving, by a terminal, data from a base station, where the data includes a primary synchronization signal and a secondary synchronization signal; obtaining, by the terminal, location information of the secondary synchronization signal in a first subframe by detecting the primary synchronization signal and the secondary synchronization signal; and determining a subframe number of the first subframe based on the location information of the secondary synchronization signal in the first subframe and a first correspondence, where the first correspondence includes a correspondence between a subframe number and a location of a secondary synchronization signal in a subframe. According to the foregoing method, different subframes are distinguished based on a location relationship between the PSS/SSS in a subframe or a location of the secondary synchronization signal in the first subframe. This is an implicit indication method. In this way, a problem that in a detection mechanism, a terminal cannot be synchronous with a device having a base station function is effectively resolved, and no additional resource needs to be occupied.

In a possible design, the terminal determines the subframe number of the first subframe based on a location relationship between the primary synchronization signal and the secondary synchronization signal in the first subframe and the first correspondence.

In a possible design, the terminal determines the subframe number of the first subframe based on a location of the secondary synchronization signal in the first subframe and the first correspondence.

In a possible design, all subframes in one radio frame include at least one set, and locations of secondary synchronization signals in subframes in each set are different.

In a possible design, locations of secondary synchronization signals in subframes with subframe numbers being (k-1)*N/m to k*N/m-1 are different from each other, where there are N subframes in the one radio frame, the N subframes include m sets, N and m are natural numbers, N is an integer multiple of m, and 1≤k≤m.

In a possible design, a location of the primary synchronization signal in the subframe is fixed. Specifically, locations of the primary synchronization signal in subframes are fixed in one communications system, but may change between different communications systems.

In a possible design, the location information of the secondary synchronization signal in the first subframe includes the location of the secondary synchronization signal in the first subframe or the location relationship between the primary synchronization signal and the secondary synchronization signal in the first subframe.

In a possible design, the foregoing scheme may be applied to an unlicensed frequency band, especially to an unlicensed standalone scenario.

In a possible design, the first correspondence further includes a correspondence between a subframe number and a location of a primary synchronization signal in a subframe.

In a possible design, the terminal determines the subframe number of the first subframe based on the location relationship between the primary synchronization signal and the secondary synchronization signal in the first subframe, the correspondence between a subframe number and a location of a primary synchronization signal in a subframe, and the correspondence between a subframe number and a location of a secondary synchronization signal in a subframe.

In a possible design, the terminal determines a type of a communications system based on the location relationship between the primary synchronization signal and the secondary synchronization signal in the first subframe or the location of the secondary synchronization signal in the first subframe.

According to another aspect, an embodiment of the present invention provides a communication method. The method includes: determining, by a base station through detection, that a carrier is idle; and sending, by the base station, data on the idle carrier, where the data includes service data and a synchronization signal, the synchronization signal is transmitted in a symbol before the service data, the service data closely follows the synchronization signal, and a start subframe of the service data is a first subframe of a radio frame. According to the foregoing method, on a base station side, a start point of a radio frame is re-defined based on burst sending. To be specific, a subframe number is re-defined based on a burst, and a synchronization signal is added before each burst, so that a terminal can relatively easily implement frame timing, that is, downlink synchronization.

According to still another aspect, an embodiment of the present invention provides a communication method. The method includes: receiving, by a terminal, the foregoing data sent by a base station; and detecting, by the terminal, a synchronization signal, and determining a subframe that closely follows the synchronization signal as a first subframe of a radio frame. In the foregoing process, the terminal performs synchronization signal detection on the received data. When the synchronization signal is detected, a frame boundary is found, and frame timing, that is, downlink synchronization, is implemented. An algorithm of the downlink synchronization method is simple.

According to another aspect, an embodiment of the present invention provides a base station. The base station has a function of performing behavior of a base station in the foregoing method designs. The function may be implemented by hardware, or may be implemented by executing corresponding software by hardware. The hardware or software includes one or more modules corresponding to the foregoing function.

In a possible design, a structure of the base station includes a processor and a transmitter. The processor is configured to support the base station in performing corresponding functions in the foregoing methods. The transmitter is configured to support communication between the base station and a terminal, and send information or an instruction in the foregoing methods to the terminal. The base station may further include a memory. The memory is configured to be coupled to the processor, and stores a program instruction and data that are necessary for the base station.

According to another aspect, an embodiment of the present invention provides a terminal. The terminal has a function of performing behavior of a terminal in the foregoing method designs. The function may be implemented by hardware. A structure of the terminal includes a receiver and a processor. Alternatively, the function may be implemented by executing corresponding software by hardware. The hardware or software includes one or more modules corresponding to the foregoing function. The modules may be software and/or hardware.

According to another aspect, an embodiment of the present invention provides a communications system. The system includes the base station and the terminal in the foregoing aspects.

According to still another aspect, an embodiment of the present invention provides a computer storage medium, which is configured to store a computer software instruction used by the foregoing base station. The computer software instruction includes a program designed for executing the foregoing aspects.

According to still another aspect, an embodiment of the present invention provides a computer storage medium, which is configured to store a computer software instruction used by the foregoing terminal. The computer software instruction includes a program designed for executing the foregoing aspects.

### BRIEF DESCRIPTION OF DRAWINGS

To describe the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of composition of a communications system according to an embodiment of the present invention;
FIG. 2 is a schematic diagram of a scenario in which a communications system operates on an unlicensed frequency band in a standalone manner according to an embodiment of the present invention;
FIG. 3 is a schematic flowchart of a communication method according to an embodiment of the present invention;
FIG. 4 is a schematic diagram of a CCA process according to an embodiment of the present invention;
FIG. 5 is a schematic diagram of preemption, by using a synchronization window, for synchronization signal sending according to an embodiment of the present invention;
FIG. 6 is a schematic structural diagram of a radio frame according to an embodiment of the present invention;
FIG. 7 is a schematic diagram of symbol locations of a primary synchronization signal and a secondary synchronization signal according to an embodiment of the present invention;
FIG. 8 is another schematic diagram of symbol locations of a primary synchronization signal and a secondary synchronization signal according to an embodiment of the present invention;
FIG. 9 is a schematic flowchart of a communication method according to another embodiment of the present invention;
FIG. 10 is a schematic diagram of a location relationship between a synchronization signal and service data according to an embodiment of the present invention;
FIG. 11 is a schematic structural diagram of a base station according to an embodiment of the present invention; and
FIG. 12 is a schematic structural diagram of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention.

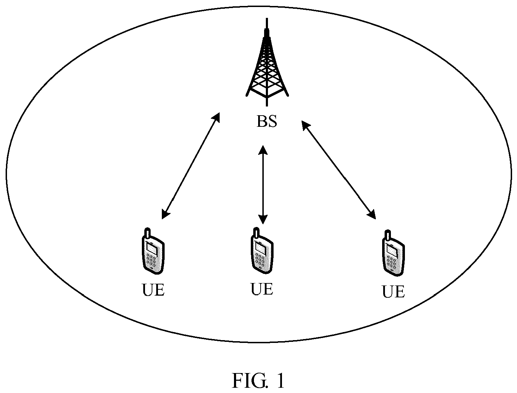

FIG. 1 is a schematic diagram of a wireless communications system that may use the technical solutions in the embodiments of the present invention.

In a solution in this embodiment, the communications system in FIG. 1 includes at least one base station (base station, BS) and a plurality of terminals.

The communications system may be various radio access technology (radio access technology, RAT) systems, for example, a code division multiple access (code division multiple access, CDMA) system, a time division multiple access (time division multiple access, TDMA) system, a frequency division multiple access (frequency division multiple access, FDMA) system, an orthogonal frequency division multiple access (orthogonal frequency division multiple access, OFDMA) system, a single carrier frequency division multiple access (single carrier FDMA, SC-FDMA) system, or another system. The terms "system" and "network" may be interchanged with each other. The OFDMA system may implement radio technologies such as evolved universal terrestrial radio access (evolved UTRA, E-UTRA), Ultra Mobile Broadband (Ultra Mobile Broadband, UMB), IEEE 802.11 (Wi-Fi), IEEE 802.16 (WiMAX), IEEE 802.20, or Flash OFDMA. In addition, the communications system may also be applied to a future-proofed communications technology. Provided that a communications system using a new communications technology is faced with a scenario similar to a downlink synchronization problem mentioned in a background technology of this application, the technical solutions provided in the embodiments of the present invention are applicable. A system architecture and a service scenario described in the embodiments of the present invention are intended to describe the technical solutions in the embodiments of the present invention more clearly, and do not constitute any limitation on the technical solutions provided in the embodiments of the present invention. A person of ordinary skill in the art may understand that with evolution of network architectures and emergence of new service scenarios, the technical solutions provided in the embodiments of the present invention are also applicable to similar technical problems. Specifically, the communications system in this embodiment of the present invention may be, for example, a Long Term Evolution (Long Term Evolution, LTE) system or various advanced systems-based on LTE.

The base station mentioned in this embodiment of the present invention is an apparatus that is configured to provide a terminal with a wireless communication function and that is deployed in a radio access network. The base station may include various forms of macro base stations, micro base stations (also referred to as small cells), relay stations, access points, and the like. In a system using a different radio access technology, a name of a device having a base station function may be different. For example, in an LTE system, a device having a base station function is referred to as an evolved NodeB (evolved NodeB, eNB, or eNodeB). For ease of description, all the foregoing apparatuses that are configured to provide a terminal with a wireless communication function are collectively referred to as base stations in all the embodiments of the present invention.

The terminal in this embodiment of the present invention may include various handheld devices, in-vehicle devices, wearable devices, and computing devices that have a wireless communication function, or another processing device connected to a wireless modem. The terminal may also be referred to as a mobile station (mobile station, MS for short), user equipment (user equipment), or terminal equipment (terminal equipment), and may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, and the like. For ease of description, all the devices mentioned above are collectively referred to as terminals in all the embodiments of the present invention.

It should be noted that a quantity and types of terminals included in the communications system shown in FIG. 1 are merely examples, and the embodiments of the present invention are not limited thereto.

The foregoing communications system can use both unlicensed and licensed spectrum resources. The licensed spectrum resources are radio frequency bands that can be used only after being licensed. The unlicensed spectrum resources are radio frequency bands that can be used without being licensed. In many countries, spectrums of a 900 MHz frequency band, a 2.4 GHz frequency band, and a 5 GHz frequency band have been allocated for unlicensed use. For ease of description, the unlicensed spectrum resources are briefly referred to as unlicensed frequency bands, and the licensed spectrum resources are briefly referred to as licensed frequency bands in the following. Use of the unlicensed frequency bands herein includes but is not limited to a scenario in which the communications system operates on an unlicensed frequency band in a standalone manner (unlicensed standalone) and a licensed-assisted access scenario.

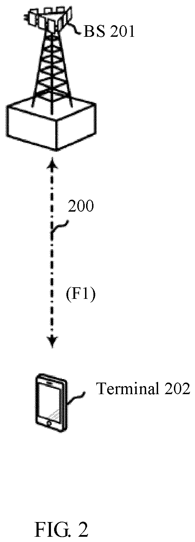

Regardless of whether the foregoing communications system uses a licensed frequency band or an unlicensed frequency band, if whether to send data needs to be determined after a status of a carrier is determined through detection, signals such as a PSS and an SSS may not be sent from a device having a base station function to a terminal at a fixed absolute time. As a result, downlink synchronization is affected, and the terminal cannot be synchronous with the device having a base station function. It may be understood that this problem is particularly prominent in the scenario in which the communications system operates on an unlicensed frequency band in a standalone manner. A scenario in which a communications system operates on an unlicensed frequency band in a standalone manner is shown in FIG. 2. In the scenario, a base station 201 may send a communication signal to a terminal 202 by using a bidirectional link 200 and receive a communication signal from the terminal 202 by using the bidirectional link 200 on a frequency F1 of the unlicensed frequency band.

An embodiment of the present invention provides a communication method. The communication method proposes a technical solution of sending downlink synchronization signals, so as to resolve the foregoing technical problem.

It should be noted that the downlink synchronization signals mentioned in this embodiment of the present invention include a PSS and an SSS. For example, three PSS sequences are defined in the 3GPP protocol. Each PSS sequence is corresponding to a physical intra-group identity of a cell. An SSS sequence is a sequence generated by interleaving two 31-bit binary sequences. The generated sequence is then scrambled by a scrambling sequence. The scrambling sequence depends on a sector number of the primary synchronization signal. In a sequence obtained by connecting two 31-bit sequences in series, sequences in a 0^{th} subframe and a 5^{th} subframe are different. The foregoing PSS sequence and SSS sequence may also be referred to as a primary synchronization code and a secondary synchronization code. For specific descriptions of the PSS and the SSS, further refer to related descriptions in 3GPP TS 36.211 and 3GPP TS 36.212, and details are not described in this embodiment of the present invention. However, the PSS and the SSS mentioned in this embodiment of the present invention are not limited to forms stipulated in a current protocol.

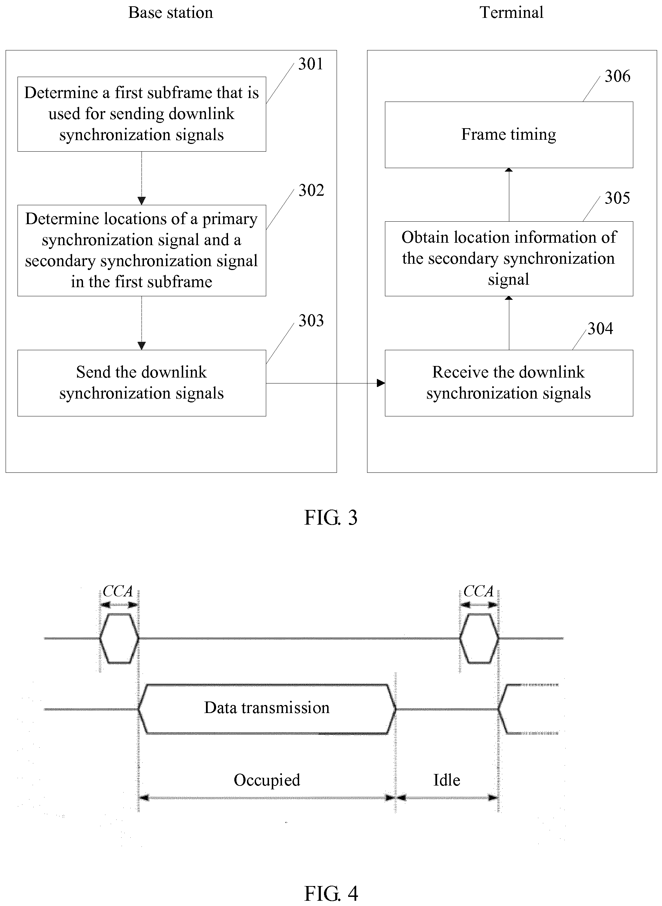

Specifically, FIG. 3 is a schematic flowchart of a communication method according to an embodiment of the present invention.

301: When detecting that a carrier is idle, a base station determines a first subframe that is used for sending downlink synchronization signals.

It may be understood that, in this embodiment of the present invention, before determining the first subframe that is used for sending the downlink synchronization signals, the base station first detects a status of a carrier on an unlicensed frequency band or a licensed frequency band. The status of a carrier may be occupied or idle.

Specifically, carrier status detection may be implemented in a clear channel assessment (clear channel assessment, CCA for short) manner. FIG. 4 illustrates a rough CCA process. When data transmission is detected, a carrier is considered occupied, and when no data transmission is detected, a carrier is considered idle. It should be noted that the carrier mentioned above is a carrier wave used for transmitting a signal, and may also be referred to as a channel in some communications systems.

Specifically, detection may be implemented by using a plurality of schemes, for example:

### 1. Energy detection:

Specifically, when the base station needs to transmit data, the base station may detect an energy level of a carrier. If determining that energy exceeds a threshold, the base station considers that the carrier is occupied, and cannot transmit the data on the carrier. Conversely, if determining that energy is lower than a threshold, the base station considers that the carrier is idle, and can transmit the data on the carrier.

### 2. Virtual carrier monitoring:

The base station indicates a channel occupancy time in a sent frame format. Another device backs off after learning of the channel occupancy time of the base station. For example, a frame header of each 802.11 radio frame includes a duration (Duration) field, indicating a time required for transmitting the frame. After receiving the frame, all other sites update their network allocation vectors (network allocation vector, NAV for short) based on the Duration field. The other sites do not transmit data before the NAVs end.

It should be noted that carrier status detection may be performed by using a plurality of technical approaches with which a person skilled in the art is familiar. This is not limited in this embodiment of the present invention.

When determining, at a specific time, that the unlicensed or licensed frequency band is available, the base station may occupy the unlicensed or licensed frequency band to send the downlink synchronization signals, that is, send the downlink synchronization signals by using a subframe of the unlicensed or licensed frequency band.

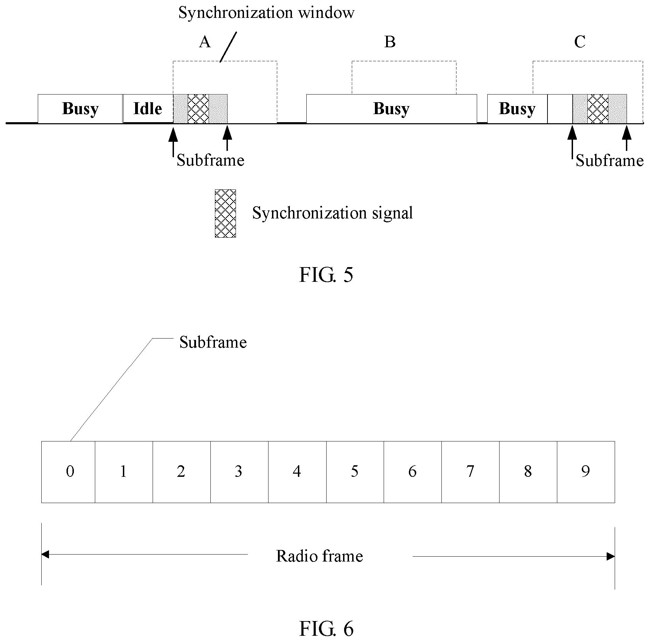

Further, considering factors such as saving overheads for the base station and/or saving power for a terminal, a window with a preset time length may be used to determine a subframe that is used for sending the downlink synchronization signals and that is on the unlicensed or licensed frequency band. For ease of description, the window with a preset time length may be referred to as a synchronization window. A time length of the synchronization window may be set based on an actual requirement, and may be, for example, 10 ms. In addition, the synchronization window may be periodic. A period of the synchronization window may be set based on an actual requirement, and may be, for example, 40 ms. This is not limited in this embodiment of the present invention. As shown in FIG. 5, if a base station determines, when a synchronization window arrives, that a carrier on an unlicensed frequency band is available, the base station can send synchronization signals in any subframe of the window, as shown by A in FIG. 5. If a base station determines that a carrier is busy within an entire synchronization window, downlink synchronization signals cannot be sent within the synchronization window, as shown by B in FIG. 5. If a base station finds, when a synchronization window arrives, that a carrier is in a busy state, but finds, in a position in the synchronization window, that the carrier is idle, the base station may send downlink synchronization signals in any idle subframe, as shown by C in FIG. 5.

It may be understood that the foregoing manner of first detecting a carrier status and then determining the first subframe that is used for sending the downlink synchronization signals may be understood as LBT.

302: The base station determines locations of a primary synchronization signal and a secondary synchronization signal in the first subframe.

In an LTE system or an advance system based on LTE, one radio frame is 10 milliseconds in length, and is further divided into 10 subframes each of which is 1 millisecond in length. Each subframe includes two timeslots of 0.5 milliseconds. Subframe numbers of the 10 subframes are 0-9 sequentially, as shown in FIG. 6. After determining the subframe that is used for sending the downlink synchronization signals, the base station can obtain a subframe number of the subframe based on system timing.

It can be understood that the primary synchronization signal may be fixed at a specific location in a subframe regardless of a type of a communications system; or a location of the primary synchronization signal in a subframe is associated with a type of a communications system, in other words, the location of the primary synchronization signal in a subframe differs between communications systems of different types, but is fixed in a communications system, where this case may also be considered that the location of the primary synchronization signal in a subframe is fixed. For example, a location of the primary synchronization signal in a time division duplex (TDD) system may be different from a location of the primary synchronization signal in a frequency division duplex system. Alternatively, the location of the primary synchronization signal in a subframe is also flexibly set.

A first correspondence may be preset. The first correspondence includes at least a correspondence between a subframe number and a location of a secondary synchronization signal in a subframe. The first correspondence may include only the correspondence between a subframe number and a location of a secondary synchronization signal in a subframe. Alternatively, the first correspondence may also be a correspondence between a location of a primary synchronization signal in a subframe, a location of a secondary synchronization signal in a subframe, and a subframe number.

It may be understood that, after the subframe number of the first subframe is determined, a specific location (for example, a symbol), in the first subframe, at which the primary synchronization signal and the secondary synchronization signal are sent can be determined based on the first correspondence and the subframe number.

Specifically, locations of the primary synchronization signal and the secondary synchronization signal in each subframe may be: A symbol occupied by the primary synchronization signal in a subframe is fixed, symbols occupied by the secondary synchronization signal in subframes in each set are different, and location settings of the primary synchronization signal and the secondary synchronization signal in subframes may be reused for different sets. In this case, all subframes in one radio frame may be understood as including one or more sets. The set herein is used for ease of describing subframe classification or grouping, and division does not necessarily need to be performed in advance.

It is assumed that there are N subframes in one radio frame, the N subframes include m sets, N and m are natural numbers, N is an integer multiple of m, and each set includes N/m subframes. Subframe numbers of subframes in a k^{th} set are (k-1)*N/m, (k-1)*N/m+1, ..., and k*N/m-1 sequentially, where 1≤k≤m. The locations of the primary synchronization signal and the secondary synchronization signal in each subframe may be specifically: A location of the primary synchronization signal in each subframe in the radio frame is fixed, for example, may be a last symbol of a first timeslot in the subframe, and locations of secondary synchronization signals in subframes with subframe numbers being (k-1)*N/m to k*N/m-1 are different from each other.

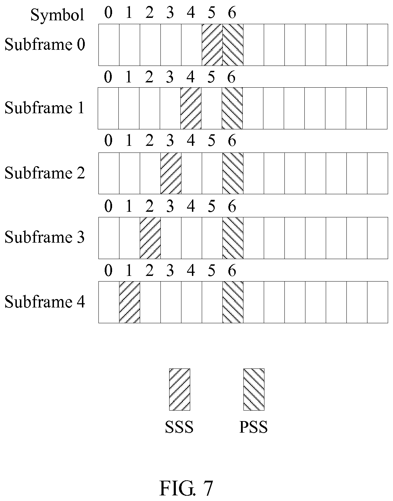

For example, an example in which N=10 and m=2 is used. As shown in FIG. 7, the primary synchronization signal may be set to be transmitted always in a 7^{th} symbol (with a symbol number being 6) in each sub frame, and symbols (symbol) occupied by the secondary synchronization signal in subframes (subframe) 0-4 are as follows: (a) a sub frame 0: a 6^{th} symbol (with a symbol number being 5); (b) a subframe 1: a 5^{th} symbol (with a symbol number being 4); (c) a subframe 2: a 4^{th} symbol (with a symbol number being 3); (d) a subframe 3: a 3^{th} symbol (with a symbol number being 2); and (e) a subframe 4: a 2^{th} symbol (with a symbol number being 1). A location relationship between the primary synchronization signal and the secondary synchronization signal in subframes 5-9 is the same as that in the subframes 0-4 sequentially, which is not shown in FIG. 7. For a location relationship between the primary synchronization signal and the secondary synchronization signal that is shown in FIG. 7, it may be understood that because a location of the primary synchronization signal in a subframe is fixed, a correspondence between a subframe number and a location of the secondary synchronization signal in a subframe may be preset, for example, a correspondence shown in Table 1, or a correspondence between a subframe number, the location of the primary synchronization signal in a subframe, and a location of the secondary synchronization signal in a subframe may be preset, for example, a correspondence shown in Table 2.

**Table 1**

| **Subframe number** | **Number of a symbol occupied by the secondary synchronization signal** |
|---|---|
| 0 | 5 |
| 1 | 4 |
| 2 | 3 |
| 3 | 2 |
| 4 | 1 |
| 5 | 5 |
| 6 | 4 |
| 7 | 3 |
| 8 | 2 |
| 9 | 1 |

**Table 2**

| **Subframe number** | **Number of a symbol occupied by the secondary synchronization signal** | **Number of a symbol occupied by the primary synchronization signal** |
|---|---|---|
| 0 | 5 | 6 |
| 1 | 4 | 6 |
| 2 | 3 | 6 |
| 3 | 2 | 6 |
| 4 | 1 | 6 |
| 5 | 5 | 6 |
| 6 | 4 | 6 |
| 7 | 3 | 6 |
| 8 | 2 | 6 |
| 9 | 1 | 6 |

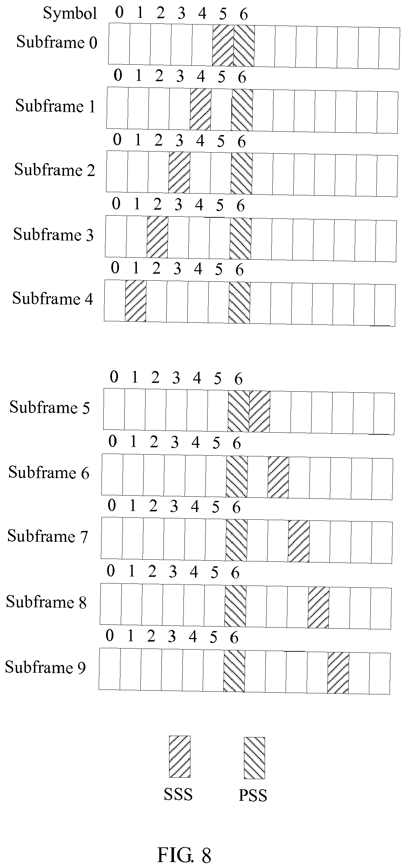

For another example, N=10, and m=1. In this case, 10 subframes are considered as one set. As shown in FIG. 8, the primary synchronization signal may be set to be transmitted always in a 7^{th} symbol (with a symbol number being 6) in each subframe, and symbols (symbol) occupied by the secondary synchronization signal in subframes (subframe) 0-10 are as follows: (a) a subframe 0: a 6^{th} symbol (with a symbol number being 5); (b) a subframe 1: a 5^{th} symbol (with a symbol number being 4); (c) a subframe 2: a 4^{th} symbol (with a symbol number being 3); (d) a subframe 3: a 3^{th} symbol (with a symbol number being 2); (e) a subframe 4: a 2^{th} symbol (with a symbol number being 1); (f) a subframe 5: an 8^{th} symbol (with a symbol number being 7); (g) a subframe 6: a 9^{th} symbol (with a symbol number being 8); (h) a subframe 7: a 10^{th} symbol (with a symbol number being 9); (i) a subframe 8: a 11^{th} symbol (with a symbol number being 10); and (j) a sub frame 9: a 12^{th} symbol (with a symbol number being 11). For locations, shown in FIG. 8, of the primary synchronization signal and the secondary synchronization signal in the subframes, a corresponding preset first correspondence may be similar to a correspondence shown in Table 1 or Table 2, except that the locations of the secondary synchronization signal in the subframes are different.

It may be understood that, for the communications systems of different types, the first correspondence may be different. The base station may determine the first correspondence based on the type of the communications system. Further, the base station may send information about the type of the communications system to the terminal, or may not send information about the type of the communications system to the terminal. The terminal determines the type of the communications system based on a determined location relationship between the primary synchronization signal and the secondary synchronization signal in the first subframe or a location of the secondary synchronization signal in the first subframe.

It should be noted that FIG. 7 and FIG. 8 are only examples. In this embodiment of the present invention, a location at which the primary synchronization signal is fixed and a specific location of the secondary synchronization signal in each subframe are not limited, provided that the terminal can detect the primary synchronization signal and the secondary synchronization signal, and further identify a corresponding subframe number. In addition, an expression form of the first correspondence is not limited in this embodiment of the present invention.

Further, when m is greater than 1, secondary synchronization codes of secondary synchronization signals in subframes in one set are the same, but different sets may be corresponding to different secondary synchronization codes. In other words, a secondary synchronization code of a secondary synchronization signal in a subframe is corresponding to a set, and a set is corresponding to a secondary synchronization code. For example, when N=10 and m=2, the subframes 0-4 may be considered as a first set, the subframes 5-9 may be considered as a second set, secondary synchronization signals in the subframes 0-4 may be corresponding to a first secondary synchronization code (SSS1), for example, a secondary synchronization code similar to a secondary synchronization code of a subframe 0 defined in the LTE system, and secondary synchronization signals in the subframes 5-9 may be corresponding to a second secondary synchronization code, for example, a secondary synchronization code similar to a secondary synchronization code of a subframe 5 defined in the LTE system. When m=1, secondary synchronization signals in all subframes may have a same secondary synchronization code, and in this case, it may also be understood that the set is corresponding to a secondary synchronization code; or secondary synchronization signals in each part of subframes are corresponding to a secondary synchronization code. A quantity of parts into which all subframes in one radio frame are divided may be determined based on a quantity of secondary synchronization codes, or may be determined according to another rule. This is not limited in this embodiment of the present invention. Regardless of whether m>1 or m=1, in the foregoing process, a set in which a subframe is located or a part to which a subframe belongs can be determined based on a subframe number. Therefore, the base station can determine a corresponding secondary synchronization code based on the subframe number.

303: The base station sends the downlink synchronization signals to a terminal in the first subframe based on the determined locations of the primary synchronization signal and the secondary synchronization signal in the first subframe.

The base station may send the downlink synchronization signals to the terminal in the first subframe based on the locations of the primary synchronization signal and the secondary synchronization signal in the first subframe.

It may be understood that data sent by the base station to the terminal may further include another signal besides the downlink synchronization signals, for example, a signal carried on a physical broadcast channel (physical broadcast channel, PBCH for short), a system information block (system information block, SIB for short), or a signal carried on a physical downlink shared channel (physical downlink shared channel, PDSCH for short). In this embodiment of the present invention, a sending manner (for example, which symbol is occupied) and content of a signal except the primary synchronization signal and the secondary synchronization signal are not limited. For example, refer to an existing protocol.

Further, the base station may determine, based on a carrier preemption status, a manner in which common signaling is sent. For example, when carrier preemption is relatively easy, the PSS/SSS and the common signaling may be sent in different subframes; and when carrier preemption is difficult, the PSS/SSS and the common signaling may be packetized together and sent in a subframe. The common signaling includes but is not limited to the PBCH and the SIB.

Specifically, whether carrier preemption is easy or difficult may be determined in a plurality of manners. For example, statistics may be collected on a probability of successfully preempting a carrier to send a synchronization signal in T synchronization windows. If the probability is greater than a preset threshold, it may be considered that carrier preemption is relatively easy. If the probability is less than a preset threshold, it may be considered that carrier preemption is relatively difficult. It should be noted that T is a natural number greater than 1, and T and the preset threshold may be set based on an actual requirement. This is not limited in this embodiment of the present invention.

In this embodiment of the present invention, on a base station side, different subframe numbers are implicitly indicated based on a location relationship between the PSS/SSS or the location of the SSS in a subframe. Therefore, without occupying an additional resource, the terminal can obtain, in a relatively convenient and easy manner, the subframe number of the first subframe in which the synchronization signals are located, and thereby can implement downlink synchronization.

304: The terminal receives data from the base station, where the data includes the primary synchronization signal and the secondary synchronization signal.

The data, sent by the base station, received by the terminal may be sent by using the unlicensed frequency band, or may be sent by using the licensed frequency band.

It may be understood that the data in this embodiment of the present invention is a generalized concept, may include service data, or may include non-service data, for example, a synchronization signal, a control signal, and system broadcast information.

305: The terminal obtains location information of the SSS in the first subframe by detecting the primary synchronization signal and the secondary synchronization signal.

The detection of the PSS and the SSS may be performed by using a plurality of technical approaches with which a person skilled in the art is familiar. Details are not described in this embodiment of the present invention. Through the detection of the PSS and the SSS, the location information of the SSS in the first subframe can be learned of. The location information may be the location of the SSS in the first subframe; or the location relationship between the PSS and the SSS in the first subframe, for example, the SSS is in a symbol before the PSS, or the SSS is in a symbol after the PSS. It may be understood that each location relationship may also be referred to as a pattern of the PSS and the SSS.

With reference to the location information of the SSS in the first subframe and the first correspondence, the subframe number of the subframe that is used for transmitting the synchronization signals may be determined, and frame timing may further be implemented.

For locations of the PSS and the SSS in different subframes and a description of the first correspondence, refer to the foregoing embodiment, and details are not described herein again.

306: The terminal determines the subframe number of the first subframe based on the location information of the SSS in the first subframe and the first correspondence.

Based on the first correspondence, the terminal may learn of the location of the SSS in each subframe or the location relationship between the PSS and the SSS. Then, with reference to at least the location information, obtained in 305, of the SSS in the first subframe, the terminal may determine the subframe number of the first subframe.

For example, after learning of the location of the SSS in the first subframe or the location relationship between the PSS and the SSS in the first subframe, the terminal may determine the subframe number of the first subframe in different manners for different cases. For example, for a case in which m=1, because location relationships between the PSS and the SSS in subframes or locations of the SSS in subframes differ from each other, a unique subframe number may be determined with reference to the first correspondence and based on the location relationship between the PSS and the SSS in the first subframe or the location of the SSS in the first subframe. For a case in which m>1, with reference to the first correspondence and a detected secondary synchronization code, a unique subframe number may be determined based on the location relationship between the PSS and the SSS in the first subframe or the location of the SSS in the first subframe. When the subframe number is determined, it may be considered that frame timing is implemented.

The following provides description with reference to FIG. 7 and FIG. 8.

FIG. 7 is used as an example. If it is detected that the SSS is in a symbol that is two symbols before the PSS, then, it may be obtained that the location information of the SSS in the first subframe is: The SSS is in a symbol 4, or the SSS is in a symbol two symbols before the PSS. Then, based on FIG. 7, Table 1, or Table 2, it may be learned that the downlink synchronization signals are transmitted in the subframe 1 or a subframe 6. If it is detected that a secondary synchronization code of the SSS is the first secondary synchronization code, it may be uniquely determined that the downlink synchronization signals are transmitted in the subframe 1. If it is detected that a secondary synchronization code of the SSS is the second secondary synchronization code, it may be uniquely determined that the downlink synchronization signals are transmitted in the subframe 6.

FIG. 8 is used as an example. If it is detected that the SSS is in a symbol that is three symbols after the PSS, similarly, based on FIG. 8, it may be learned that the downlink synchronization signals are transmitted in the subframe 7.

Further, for the communications systems of different types, the first correspondence may be different. This also means that a location setting of the SSS in a subframe or a setting of a location relationship between the SSS and the PSS in a subframe is different in the communications systems of different types. The terminal may further determine a type of a communications system based on the determined location relationship between the PSS and the SSS in the first subframe or the determined location of the SSS in the first subframe.

According to the communication method provided in this embodiment of the present invention, different subframes are distinguished based on the location relationship between the PSS/SSS in a subframe or the location of the SSS in a subframe. This is an implicit indication method. In this way, a problem that in a detection mechanism, a terminal cannot be synchronous with a device having a base station function is effectively resolved, and no additional resource needs to be occupied.

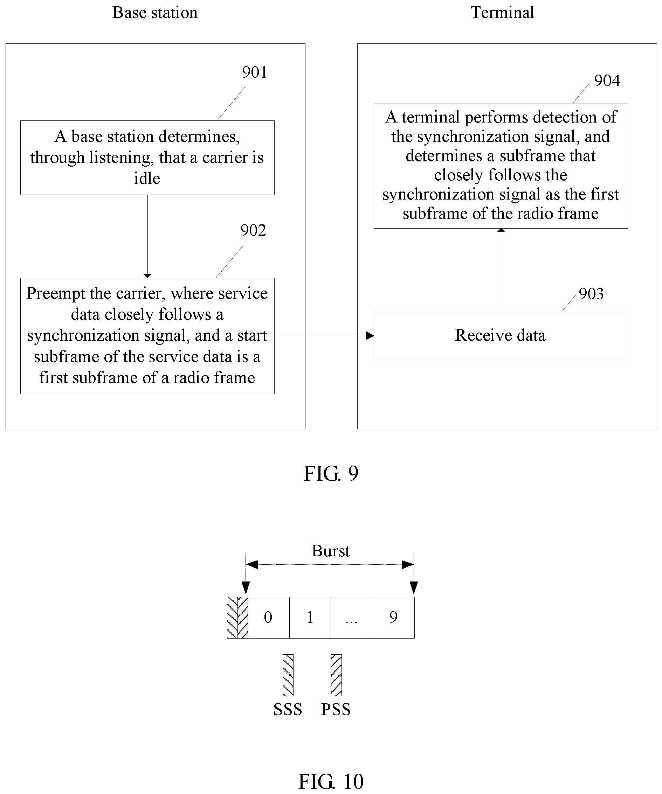

Still another embodiment of the present invention provides a communication method. As shown in FIG. 9, the communication method includes the following steps.

901: Abase station determines, through detection, that a carrier is idle.

In this step, for a manner in which the base station detects a carrier status on a licensed or unlicensed frequency band, refer to a related description in 301.

902: The base station sends data on the idle carrier, where the data includes service data and a synchronization signal, the synchronization signal is transmitted in a symbol before the service data, the service data closely follows the synchronization signal, and a start subframe of the service data is a first subframe of a radio frame.

The synchronization signal in this step is a signal used for facilitating detection performed by a terminal and implementing synchronization between the terminal and the base station. A specific form of the synchronization signal may be, for example, at least one of a PSS and an SSS in a current protocol. This is not limited in this embodiment of the present invention.

When detecting that the carrier is idle, the base station may preempt the carrier for sending the data, and adds the synchronization signal before the service data (burst). The synchronization signal is used to identify a start point of a radio frame, and a subframe closely following the synchronization signal is defined as a first subframe of the radio frame, for example, a subframe 0. Subframe numbers of other subframes may be deduced by analogy. For example, FIG. 10 illustrates a location relationship between the synchronization signal and the burst.

In this embodiment of the present invention, on a base station side, a start point of a radio frame is re-defined based on burst sending. To be specific, a subframe number is re-defined based on a burst, and a synchronization signal is added before each burst, so that the terminal can relatively easily implement frame timing, that is, downlink synchronization.

903: A terminal receives the foregoing data from the base station.

904: The terminal performs detection of the synchronization signal, and determines a subframe that closely follows the synchronization signal as the first subframe of the radio frame.

In the foregoing process, the terminal performs synchronization signal detection on the received data. When the synchronization signal is detected, a frame boundary is found, and frame timing, that is, downlink synchronization, is implemented. An algorithm of the downlink synchronization method is simple.

In the foregoing embodiments provided in the present invention, the communication method provided in the embodiments of the present invention is described separately from perspectives of each network element and interaction between network elements. It may be understood that, to implement the foregoing functions, each network element, for example, the terminal or the base station, includes a corresponding hardware structure and/or software module for performing the functions. A person skilled in the art may be easily aware that the units and algorithm steps in the examples described with reference to the embodiments disclosed in this specification may be implemented by hardware or a combination of hardware and computer software in the present invention. Whether a function is performed by hardware or by computer software driving hardware depends on particular applications and design constraint conditions of the technical solutions. A person skilled in the art may use a different method to implement the described functions for each particular application, but it should not be considered that the implementation goes beyond the scope of the present invention.

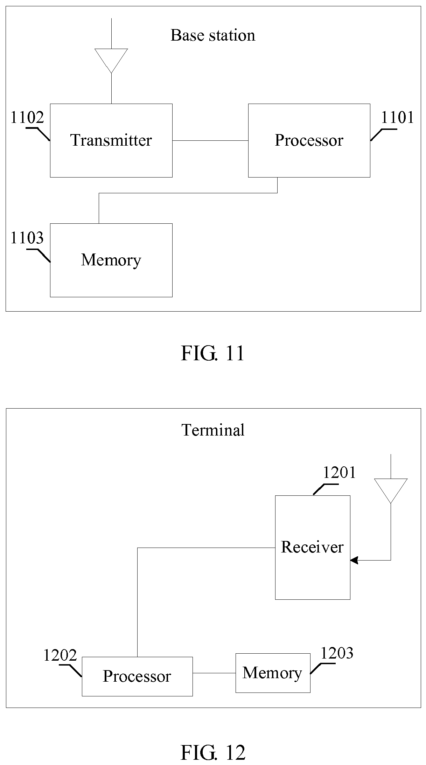

FIG. 11 is a possible schematic structural diagram of a base station in the foregoing embodiments. The base station may be the base station shown in FIG. 1.

The base station includes a processor 1101 and a transmitter 1102. The processor 1101 may be configured to perform control or process various functions used to communicate with a terminal or another network device. The transmitter 1102 may be configured to support communication between the base station and the terminal in the foregoing embodiments. On a downlink, service data and a signaling message are processed by the processor 1101, and are modulated by the transmitter 1102 to generate a downlink signal. The downlink signal is sent to the terminal by using an antenna. The transmitter 1102 and the processor 1101 may be further configured to perform an execution process of the base station in the embodiment shown in FIG. 3 and/or another process of the technology described in the embodiments of the present invention. For example, the processor 1101 is configured to: when detecting that a carrier is idle, determine a first subframe that is used for sending downlink synchronization signals, where the downlink synchronization signals include a primary synchronization signal and a secondary synchronization signal; and determine locations of the primary synchronization signal and the secondary synchronization signal in the first subframe, where the location of the secondary synchronization signal is determined based on a subframe number of the first subframe and a first correspondence, and the first correspondence includes a correspondence between a subframe number and a location of a secondary synchronization signal in a sub frame; and the transmitter 1102 is configured to send the primary synchronization signal and the secondary synchronization signal to the terminal in the first subframe based on the locations, determined by the processor 1101, of the primary synchronization signal and the secondary synchronization signal in the first subframe. Optionally, the processor 1101 may be further configured to determine the first correspondence based on a type of a communications system. Optionally, the processor 1101 is specifically configured to: when detecting that a carrier of an unlicensed spectrum resource is idle, determine the first subframe, on the unlicensed spectrum resource, that is used for sending the downlink synchronization signals. Optionally, the transmitter 1102 may be further configured to send common signaling to the terminal.

Alternatively, the transmitter 1102 and the processor 1101 may be further configured to perform an execution process of the base station in the embodiment shown in FIG. 9 and/or another process of the technology described in the embodiments of the present invention. For example, the processor 1101 is configured to determine, through detection, that a carrier is idle; and the transmitter 1102 is configured to send data on the idle carrier, where the data includes service data and a synchronization signal, the synchronization signal is transmitted in a symbol before the service data, the service data closely follows the synchronization signal, and a start subframe of the service data is a first subframe of a radio frame.

In addition, the base station may further include a memory 1103. The memory 1103 may be configured to store program code and data of the base station. It may be understood that FIG. 11 shows only a simplified design of the base station. In actual application, the base station may include any quantities of transmitters, processors, memories, and the like. All base stations that can implement the embodiments of the present invention fall within the protection scope of the present invention.

For a specific implementation process and manner of each module/unit in the base station, reference may be further made to a description in a related embodiment.

It may be understood that the processor and transmitter each may be implemented by one or more hardware modules, or may be implemented by one or more software modules. The processor may also be a processing unit, the transmitter may also be a transmitting unit, and the memory may also be a storage unit.

FIG. 12 is a simplified schematic diagram of a possible design structure of a terminal in the foregoing embodiments. The terminal may be one of the UEs shown in FIG. 1. The terminal includes a receiver 1201 and a processor 1202.

On a downlink, the receiver 1201 regulates (for example, performing filtering, amplification, down conversion, and digitalization on) a signal received by using an antenna, and provides an input sample. The processor 1202 is configured to perform various processing-related functions such as management and control in the terminal. The receiver 1201 and the processor 1202 may be further configured to perform an execution process of the terminal in FIG. 3 and/or another process of the technology described in the embodiments of the present invention. For example, the receiver 1201 is configured to receive data from a base station, where the data includes a primary synchronization signal and a secondary synchronization signal; and the processor 1202 is configured to: obtain location information of the secondary synchronization signal in a first subframe by detecting the primary synchronization signal and the secondary synchronization signal; and determine a subframe number of the first subframe based on the location information of the secondary synchronization signal in the first subframe and a first correspondence, where the first correspondence includes a correspondence between a subframe number and a location of a secondary synchronization signal in a subframe. Optionally, the processor 1202 is specifically configured to determine the subframe number of the first subframe based on a location of the secondary synchronization signal in the first subframe and the first correspondence, or configured to determine the subframe number of the first subframe based on a location relationship between the primary synchronization signal and the secondary synchronization signal in the first subframe, a correspondence between a subframe number and a location of a primary synchronization signal in a subframe, and a correspondence between a subframe number and a location of a secondary synchronization signal in a subframe. Optionally, the processor 1202 may be further configured to: determine a type of a communications system based on the location relationship between the primary synchronization signal and the secondary synchronization signal in the first subframe or the location of the secondary synchronization signal in the first subframe. Optionally, the processor 1202 may be further configured to: determine the subframe number of the first subframe based on the location information of the secondary synchronization signal in the first subframe, the first correspondence, and a secondary synchronization code.

Alternatively, the receiver 1201 and the processor 1202 may be further configured to perform an execution process of the terminal in the embodiment shown in FIG. 9 and/or another process of the technology described in the embodiments of the present invention. For example, the receiver 1201 is configured to receive data from a base station, where the data includes service data and a synchronization signal, the synchronization signal is transmitted in a symbol before the service data, the service data closely follows the synchronization signal, and a start subframe of the service data is a first subframe of a radio frame; and the processor 1202 is configured to perform detection of the synchronization signal, and determine a subframe that closely follows the synchronization signal as the first subframe of the radio frame.

In addition, it may be understood that the terminal may further include a memory 1203. The memory 1203 may be configured to store program code and data of the terminal.

Specifically, the processor 1202 may perform detection of the PSS and the SSS by using at least one correlator. The correlator may also be considered as a part of the processor.

It may be understood that, for a specific implementation process and manner of each module/unit in the terminal, reference may be further made to a description in a related embodiment.

It may be understood that the processor and receiver each may be implemented by one or more hardware modules, or may be implemented by one or more software modules. The processor may also be a processing unit, the receiver may also be a receiving unit, and the memory may also be a storage unit.

It should be noted that the processor configured to implement the foregoing base station and the terminal in the embodiments of the present invention may be a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The processor may implement or execute various example logical blocks, modules, and circuits described with reference to content disclosed in the present invention. Alternatively, the processor may be a combination of processors implementing a computing function, for example, a combination of one or more microprocessors, or a combination of a DSP and a microprocessor.

Steps of methods or algorithms described with reference to the content disclosed in the present invention may be implemented by hardware, or may be implemented by executing a software instruction by a processor. The software instruction may be formed by a corresponding software module. The software module may be stored in a RAM memory, a flash memory, a ROM memory, an EPROM memory, an EEPROM memory, a register, a hard disk, a removable hard disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in user equipment. Certainly, the processor and the storage medium may exist in the user equipment as discrete components.

A person skilled in the art should be aware that, in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and benefits of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. A communication method, comprising:
determining, by a base station when detecting that a carrier is idle, a first subframe that is used for sending downlink synchronization signals, wherein the downlink synchronization signals comprise a primary synchronization signal and a secondary synchronization signal;
determining, by the base station, locations of the primary synchronization signal and the secondary synchronization signal in the first subframe, wherein the location of the secondary synchronization signal is determined based on a subframe number of the first subframe and a first correspondence, and the first correspondence comprises a correspondence between a subframe number and a location of a secondary synchronization signal in a subframe; and
sending, by the base station, the downlink synchronization signals to a terminal in the first subframe based on the determined locations of the primary synchronization signal and the secondary synchronization signal in the first subframe.

2. The method according to claim 1, wherein the first correspondence is associated with a type of a communications system, and the method further comprises:
determining, by the base station, the first correspondence based on the type of the communications system.

3. The method according to claim 1 or 2, wherein all subframes in one radio frame comprise at least one set, and locations of secondary synchronization signals in subframes in each set are different.

4. The method according to claim 3, wherein that locations of secondary synchronization signals in subframes in each set are different comprises:
locations of secondary synchronization signals in subframes with subframe numbers being (k-1)*N/m to k*N/m-1 are different from each other, wherein there are N subframes in the one radio frame, the N subframes comprise m sets, N and m are natural numbers, N is an integer multiple of m, and 1≤k≤m.

5. The method according to any one of claims 1 to 4, wherein a location of the primary synchronization signal in each subframe is fixed.

6. The method according to any one of claims 1 to 5, wherein all subframes in one radio frame comprise at least two sets, secondary synchronization codes of secondary synchronization signals in subframes in each set are the same, and different sets are corresponding to different secondary synchronization codes.

7. The method according to any one of claims 1 to 6, wherein the first correspondence further comprises a correspondence between a subframe number and a location of a primary synchronization signal in a subframe.

8. The method according to any one of claims 1 to 7, wherein the determining, by a base station when detecting that a carrier is idle, a first subframe that is used for sending downlink synchronization signals comprises: when detecting that a carrier of an unlicensed spectrum resource is idle, determining, by the base station, the first subframe, on the unlicensed spectrum resource, that is used for sending the downlink synchronization signals.

9. The method according to any one of claims 1 to 8, further comprising: sending, by the base station, common signaling to the terminal, wherein
if a probability of successfully preempting a carrier to send the downlink synchronization signals in T synchronization windows is greater than a preset threshold, the common signaling and the downlink synchronization signals are in different subframes;
or
if a probability of successfully preempting a carrier to send the downlink synchronization signals in T synchronization windows is less than a preset threshold, the common signaling and the downlink synchronization signals are in a same subframe, wherein T is a natural number greater than 1.

10. A communication method, comprising:
receiving, by a terminal, data from a base station, wherein the data comprises a primary synchronization signal and a secondary synchronization signal;
obtaining, by the terminal, location information of the secondary synchronization signal in a first subframe by detecting the primary synchronization signal and the secondary synchronization signal; and
determining, by the terminal, a subframe number of the first subframe based on the location information of the secondary synchronization signal in the first subframe and a first correspondence, wherein the first correspondence comprises a correspondence between a subframe number and a location of a secondary synchronization signal in a subframe.

11. The method according to claim 10, wherein all subframes in one radio frame comprise at least one set, and locations of secondary synchronization signals in subframes in each set are different.

12. The method according to claim 11, wherein that locations of secondary synchronization signals in subframes in each set are different comprises:
locations of secondary synchronization signals in subframes with subframe numbers being (k-1)*N/m to k*N/m-1 are different from each other, wherein there are N subframes in the one radio frame, the N subframes comprise m sets, N and m are natural numbers, N is an integer multiple of m, and 1≤k≤m.

13. The method according to any one of claims 10 to 12, wherein a location of the primary synchronization signal in each subframe is fixed.

14. The method according to any one of claims 10 to 13, wherein all subframes in one radio frame comprise at least two sets, secondary synchronization codes of secondary synchronization signals in subframes in each set are the same, and different sets are corresponding to different secondary synchronization codes.

15. The method according to claim 14, wherein the determining a subframe number of the first subframe based on the location information of the secondary synchronization signal in the first subframe and a first correspondence comprises:
determining the subframe number of the first subframe based on the location information of the secondary synchronization signal in the first subframe, the first correspondence, and a secondary synchronization code.

16. The method according to claim 15, wherein the location information of the secondary synchronization signal in the first subframe comprises a location of the secondary synchronization signal in the first subframe or a location relationship between the primary synchronization signal and the secondary synchronization signal in the first subframe.

17. The method according to any one of claims 10 to 16, wherein the first correspondence further comprises a correspondence between a subframe number and a location of a primary synchronization signal in a subframe.

18. The method according to claim 17, wherein the determining, by the terminal, a subframe number of the first subframe based on the location information of the secondary synchronization signal in the first subframe and a first correspondence comprises:
determining, by the terminal, the subframe number of the first subframe based on the location relationship between the primary synchronization signal and the secondary synchronization signal in the first subframe, the correspondence between a subframe number and a location of a primary synchronization signal in a subframe, and the correspondence between a subframe number and a location of a secondary synchronization signal in a subframe.

19. The method according to any one of claims 10 to 18, further comprising: determining, by the terminal, a type of a communications system based on the location relationship between the primary synchronization signal and the secondary synchronization signal in the first subframe or the location of the secondary synchronization signal in the first subframe.

20. Abase station, comprising:
a processor, configured to: when detecting that a carrier is idle, determine a first subframe that is used for sending downlink synchronization signals, wherein the downlink synchronization signals comprise a primary synchronization signal and a secondary synchronization signal, and
the processor is further configured to determine locations of the primary synchronization signal and the secondary synchronization signal in the first subframe, wherein the location of the secondary synchronization signal is determined based on a subframe number of the first subframe and a first correspondence, and the first correspondence comprises a correspondence between a subframe number and a location of a secondary synchronization signal in a subframe; and
a transmitter, configured to send the primary synchronization signal and the secondary synchronization signal to a terminal in the first subframe based on the locations, determined by the processor, of the primary synchronization signal and the secondary synchronization signal in the first subframe.

21. The base station according to claim 20, wherein the processor is further configured to determine the first correspondence based on a type of a communications system.

22. The base station according to claim 20 or 21, wherein all subframes in one radio frame comprise at least one set, and locations of secondary synchronization signals in subframes in each set are different.

23. The base station according to claim 22, wherein that locations of secondary synchronization signals in subframes in each set are different comprises:
locations of secondary synchronization signals in subframes with subframe numbers being (k-1)*N/m to k*N/m-1 are different from each other, wherein there are N subframes in the one radio frame, the N subframes comprise m sets, N and m are natural numbers, N is an integer multiple of m, and 1≤k≤m.

24. The base station according to any one of claims 20 to 23, wherein a location of the primary synchronization signal in each subframe is fixed.

25. The base station according to any one of claims 20 to 24, wherein all subframes in one radio frame comprise at least two sets, secondary synchronization codes of secondary synchronization signals in subframes in each set are the same, and different sets are corresponding to different secondary synchronization codes.

26. The base station according to any one of claims 20 to 25, wherein the processor is specifically configured to: when detecting that a carrier of an unlicensed spectrum resource is idle, determine the first subframe, on the unlicensed spectrum resource, that is used for sending the downlink synchronization signals.

27. The base station according to any one of claims 20 to 26, wherein the transmitter is further configured to send common signaling to the terminal, wherein
if a probability of successfully preempting a carrier to send the downlink synchronization signals in T synchronization windows is greater than a preset threshold, the common signaling and the downlink synchronization signals are in different subframes;
or
if a probability of successfully preempting a carrier to send the downlink synchronization signals in T synchronization windows is less than a preset threshold, the common signaling and the downlink synchronization signals are in a same subframe, wherein T is a natural number greater than 1.

28. The base station according to any one of claims 20 to 27, wherein the first correspondence further comprises a correspondence between a subframe number and a location of a primary synchronization signal in a subframe.

29. A terminal, comprising:
a receiver, configured to receive data from a base station, wherein the data comprises a primary synchronization signal and a secondary synchronization signal; and
a processor, configured to: obtain location information of the secondary synchronization signal in a first subframe by detecting the primary synchronization signal and the secondary synchronization signal; and determine a subframe number of the first subframe based on the location information of the secondary synchronization signal in the first subframe and a first correspondence, wherein the first correspondence comprises a correspondence between a subframe number and a location of a secondary synchronization signal in a subframe.

30. The terminal according to claim 29, wherein the first correspondence further comprises a correspondence between a subframe number and a location of a primary synchronization signal in a subframe.

31. The terminal according to claim 29 or 30, wherein the processor is specifically configured to determine the subframe number of the first subframe based on a location of the secondary synchronization signal in the first subframe and the first correspondence.

32. The terminal according to claim 30, wherein the processor is specifically configured to:
determine the subframe number of the first subframe based on a location relationship between the primary synchronization signal and the secondary synchronization signal in the first subframe, the correspondence between a subframe number and a location of a primary synchronization signal in a subframe, and the correspondence between a subframe number and a location of a secondary synchronization signal in a subframe.

33. The terminal according to any one of claims 29 to 32, wherein all subframes in one radio frame comprise at least one set, and locations of secondary synchronization signals in subframes in each set are different.

34. The terminal according to claim 33, wherein that locations of secondary synchronization signals in subframes in each set are different comprises:
locations of secondary synchronization signals in subframes with subframe numbers being (k-1)*N/m to k*N/m-1 are different from each other, wherein there are N subframes in the one radio frame, the N subframes comprise m sets, N and m are natural numbers, N is an integer multiple of m, and 1≤k≤m.

35. The terminal according to any one of claims 29 to 34, wherein a location of the primary synchronization signal in each subframe is fixed.

36. The terminal according to any one of claims 29 to 35, wherein all subframes in one radio frame comprise at least two sets, secondary synchronization codes of secondary synchronization signals in subframes in each set are the same, and different sets are corresponding to different secondary synchronization codes.

37. The terminal according to claim 36, wherein the processor is specifically configured to:
determine the subframe number of the first subframe based on the location information of the secondary synchronization signal in the first subframe, the first correspondence, and a secondary synchronization code.

38. The terminal according to any one of claims 29 to 37, wherein the processor is further configured to: determine a type of a communications system based on the location relationship between the primary synchronization signal and the secondary synchronization signal in the first subframe or the location of the secondary synchronization signal in the first subframe.
